# EUROPEAN PATENT APPLICATION

(11) **EP 2 374 755 A1**
(43) Date of publication of application: **12.10.2011**
(21) Application number: 11154364.1
(22) Date of filing: 14.02.2011
(51) Int. Cl.: C01B 31/36

(54) **Method for fabricating silicon carbide material**

(30) Priority: 07.04.2010 US 321608 P; 01.07.2010 US 829347
(71) Applicant: GE Investment Co., Ltd., Taipei City, Taiwan (CN)
(72) Inventor: Tsai, Wen-Kuei, Taipei (TW)
(74) Representative: Karakatsanis, Georgios

(57) **Abstract**

Methods for fabricating silicon carbide material are disclosed. One method includes: recycling carbon dioxide (CO₂) emitted from a plant; and employing the recycled carbon dioxide and silicon dioxide (SiO2) to produce the silicon carbide (SiC) material and oxygen. Another method includes: recycling a carbon dioxide (CO₂) emitted from a plant; and employing the recycled carbon dioxide and silicon (Si) to produce silicon carbide (SiC) material and oxygen.

## Description

### CROSS-REFERENCE TO RELATED APPLICATIONS

The present application claims the benefit of U.S. Provisional Application No. 61/321,608 filed on April 7, 2010, the entire contents of which are hereby incorporated by reference.

### BACKGROUND OF THE INVENTION

### 1. Field of the Invention

The present invention generally relates to methods and systems for fabricating silicon carbide in a manner beneficial to the environment.

### 2. Description of Related Art

Silicon (Si) and silicon carbide (SiC) are essential materials to manufacture various semiconductor devices and photoelectronic devices. Silicon has dominated the electronics industry today; however, in some applications silicon carbide has superior properties than silicon. For example, silicon carbide has higher thermal conductivity than copper and silicon so that silicon carbide substrates are usually employed in semiconductor devices requiring excellent heat-dissipation efficiency, such as light-emitting diodes, solar cells, rectification diodes, and so on.

Methods and systems have been developed in the art to produce silicon and silicon carbide raw materials and they are simply discussed herein from an environmental standpoint.

The most common way for manufacturing silicon carbide is to combine silica sand (SiO₂) and carbon (C) in an Acheson graphite electric resistance furnace at a high temperature about 2500 °C or more in which the following major chemical reaction is carried out:

**SiO₂ + C → SiC + O₂** (1)

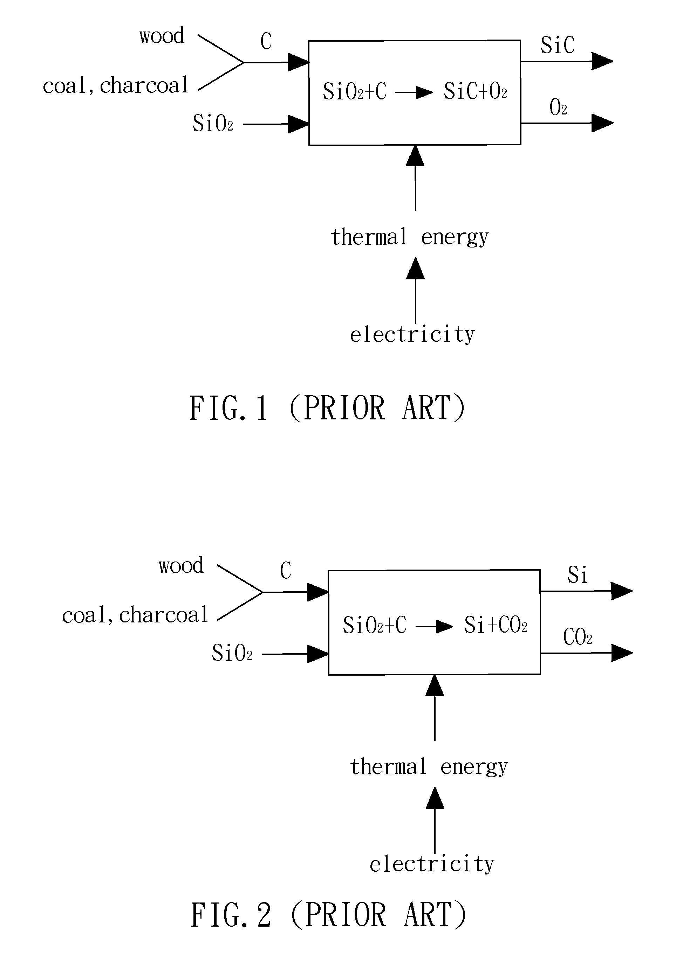

FIG. 1 illustrates a system for producing silicon carbide raw material by the conventional Acheson method. The reaction is an endothermic reaction so that a great quantity of thermal energy, or a great quantity of electricity to be converted to thermal energy, must be provided to the system to keep the furnace at high temperature. In addition, the reaction also needs a great quantity of carbon, which is acquired from coal, charcoal, or obtained by burning woods, and this will consume the nature resources and affect the environment.

In another aspect, silicon is commercially prepared by the reaction of high-purity silica with wood, charcoal, and coal, in an electric arc furnace using carbon electrodes. At temperatures over 1,900 °C, the carbon reduces the silica to silicon according to the following chemical equation:

**SiO₂ + C → Si + CO₂** (2)

Liquid silicon is collected in the bottom of the furnace, and then drained and cooled. The silicon produced via this method is called *metallurgical grade silicon* and the purity of silicon can reach 98%. In some applications such as a solar power plant, a higher purity of silicon is needed. Practically, the solar power generation is conducted by using so-called solar cells with solar panels of high-purity silicon as the cell elements capable of directly converting the solar energy into electric energy. High-purity silicon will improve the reliability of the solar power generation. Accordingly, in a solar power plant, metallurgical grade silicon is necessarily purified to solar cell grade silicon.

FIG. 2 illustrates a system of a silicon generation plant for producing silicon raw material in which the above chemical equation (2) is employed. The generated silicon may be used in a solar power plant or a solar cells factory. Two disadvantages of this system are the same as the system of FIG. 1. A great quantity of thermal energy or electricity to be converted to thermal energy is needed to activate the chemical reaction. Wood, charcoal, and coal are acquired from natural resources, environment being destroyed. Moreover, a serious problem is that carbon dioxide is generated and emitted to the atmosphere. As is known, the most serious problems of global concern in the near future would include the problem of global warming-up as a consequence of the greenhouse effect due to accumulation of carbon dioxide. In this regard, great efforts are being made for the research and development works of a substitute energy source that is free from exhaustion of natural resources and free from emission of carbon dioxide. And the most promising and highlighted in recent years is the technology of solar power generation by the utilization of the solar energy as a clean and non-exhaustible energy source. However, for producing high-purity silicon, the solar power plant utilizes a system consuming natural resources and discharging carbon dioxide. In the other words, the clean, non-exhaustible solar energy is produced by sacrificing other natural resources and the environment.

To produce high purity silicon carbide, prior art provides methods harmful to the environment; therefore, it would be advantageous to provide methods and systems for producing silicon carbide raw material that are beneficial to the environment.

### SUMMARY OF THE INVENTION

An object of the present invention is to provide provide methods or systems for producing silicon carbide raw material that are beneficial to the environment.

According to the object, one embodiment of the present invention provides a method for producing silicon carbide, which includes: recycling carbon dioxide (CO₂) emitted from a plant; and employing the recycled carbon dioxide and silicon dioxide (Si02) to produce the silicon carbide (SiC) material and oxygen.

According to the object, one embodiment of the present invention provides a method for producing silicon carbide, which includes: recycling a carbon dioxide (CO₂) emitted from a plant; and employing the recycled carbon dioxide and silicon (Si) to produce silicon carbide (SiC) material and oxygen.

### BRIEF DESCRIPTION OF THE DRAWINGS

FIG. 1 illustrates a system for producing silicon carbide raw material by conventional method.
FIG. 2 illustrates a system of a silicon generation plant for producing silicon raw material by conventional method.
FIG. 3 illustrates materials and energy balance of a conventional thermal power plant.
FIG. 4 shows a block diagram for producing silicon carbide (SiC) according to one embodiment of the present invention.
FIG. 5 shows a block diagram for producing silicon carbide (SiC) according to another embodiment of the present invention.
FIG. 6 shows a block diagram for producing silicon carbide (SiC) according to another embodiment of the present invention.
FIG. 7 shows a block diagram for producing silicon carbide (SiC) according to another embodiment of the present invention.

### DETAILED DESCRIPTION OF THE INVENTION

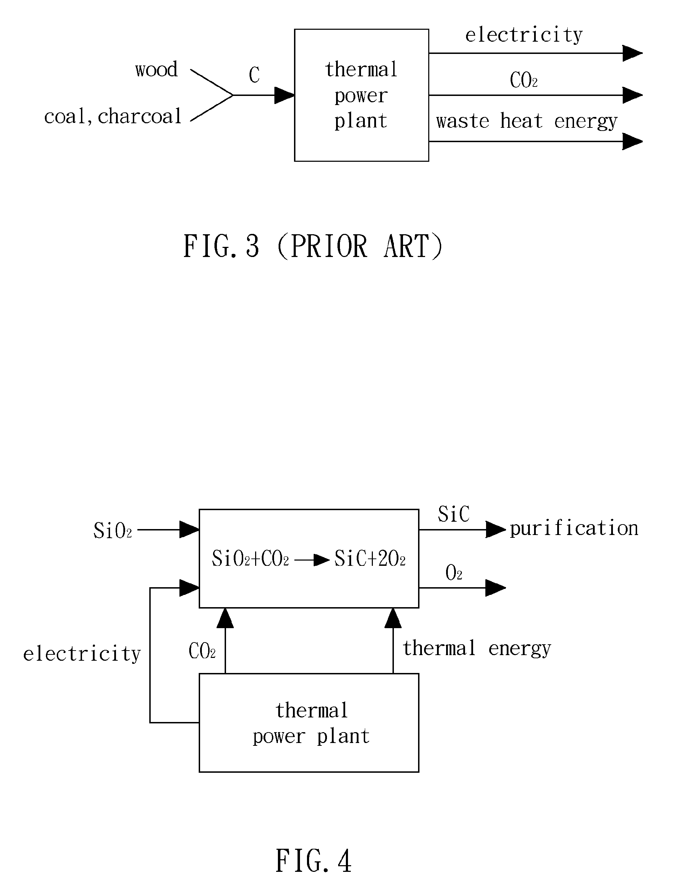

Before disclosing examples of the present invention, conventional method for treating carbon dioxide gas produced by the combustion of various carbon-containing fuels, such as petroleum and coals, is further discussed. Referring to FIG. 3, it illustrates materials and energy balance of a convention thermal power plant. The combustion of carbon acquired from burned woods or coal (or other natural resources such as oil and natural gas) generates steam, and thermal energy of the steam is converted to electric energy by steam turbine. Accordingly, carbon dioxide is inevitability to be generated by such a coal-fire power plant. In addition, some heat energy is typically wasted in the thermal power plant, and the wasted thermal energy may disturb equilibrium of the environment.

One practical method to treat the carbon dioxide discharged from the thermal power plant (or the silicon generation plant) is using a technology called *carbon sequestration,* which is to capture carbon dioxide or other forms of carbon from the atmosphere and buries it in deep underground or in the ocean for the mitigation of global warming. In recent years, it has been proposed as a way to mitigate the accumulation of greenhouse gases in the atmosphere released by the burning of fossil fuels.

Although carbon sequestration is practical, it is a high cost process and has many disadvantages. To store carbon dioxide gas underground, it has to be compressed into liquid form. Even though care is taken to identify the right areas for storing the gas underground, there is always a likelihood of the gas leaking out. The leaked liquid-form carbon dioxide gas can mix with ground water. This will make the ground water extremely toxic and unsuitable for human consumption.

The present invention provides a scheme to produce silicon carbon. The scheme not only emits free of carbon dioxide but also solve carbon dioxide discharged from the thermal power plant or the silicon generation plant or any apparatus burning fossil fuels.

Instead of equation (1) and (2), the present invention conceives that silicon carbide raw material can be produced by the following two chemical equations:

**SiO₂ + CO₂ → SiC + 2O₂** (3)

**Si + CO₂ → SiC + O₂** (4)

Further, by employing the equation (3) and (4), the present invention provides method and system for producing silicon carbide in a manner that is cost effective, energy efficient, and friendly to the environment.

FIG. 4 shows a block diagram for producing silicon carbide (SiC) according to one embodiment of the present invention in which equation (3) is employed. In this example, silicon dioxide needed for the reaction may be taken from wollastonite, and required carbon dioxide is provided from the discharging gas of a furnace of a thermal power plant. Because equation (3) is an endothermic reaction, thermal energy is required to activate the reaction. The required thermal energy may be partially or substantially provided from the waste thermal energy of the furnace of the thermal power plant. The electricity, required to be converted to thermal energy, or, required to an electronic system for proceeding the reaction, can be conveniently provided from the thermal power plant, which just generates electricity. Accordingly, silicon carbide (SiC) and oxygen gas are generated thereby. An additional purification process may be performed to the generated silicon carbide (SiC) for promoting its purity.

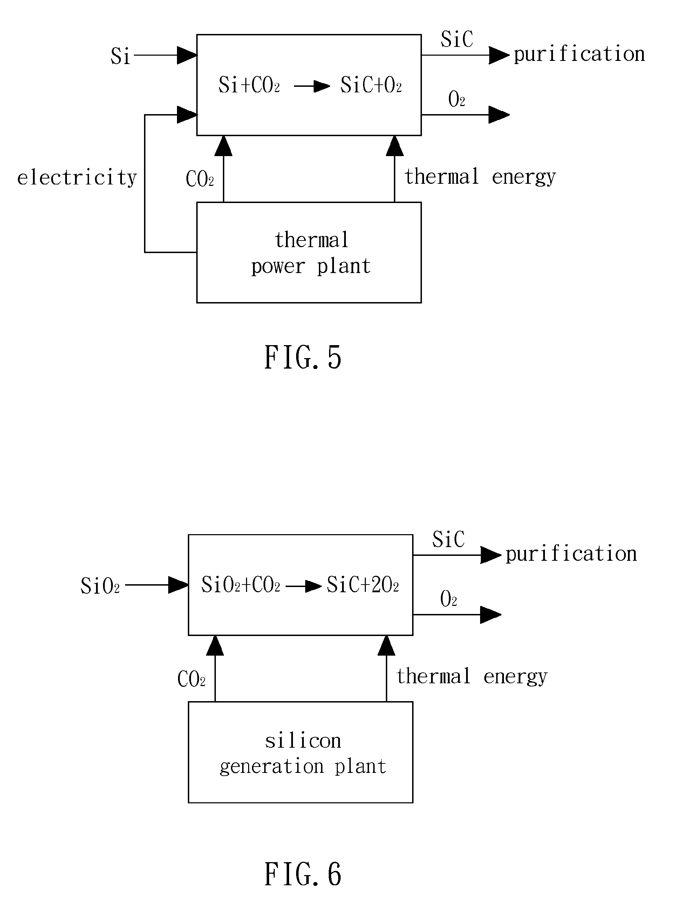

FIG. 5 shows a block diagram for producing silicon carbide (SiC) according to another embodiment of the present invention in which equation (4) is employed. In this example, required carbon dioxide is provided from the discharging gas of a furnace of a thermal power plant, and silicon (Si) needed for the reaction may be taken from the failed semiconductor silicon devices, such as intermediate products and scraps taken from single crystal rods of semiconductor silicon as grown, unacceptable crystals, broken silicon wafers, and so on. Because equation (4) is an endothermic reaction, thermal energy is required to activate the reaction. The required thermal energy may be partially or substantially provided from the waste thermal energy of the furnace of the thermal power plant. The electricity, required to be converted to thermal energy, or, required to an electronic system for proceeding the reaction, can be conveniently provided from the thermal power plant, which just generates electricity. Accordingly, silicon carbide (SiC) and oxygen gas are generated thereby. An additional purification process may be performed to the generated silicon carbide (SiC) for promoting its purity.

FIG. 6 shows a block diagram for producing silicon carbide (SiC) according to another embodiment of the present invention in which equation (3) is employed. In this example, silicon dioxide needed for the reaction may be taken from wollastonite, and required carbon dioxide is provided from the discharging gas of a furnace of a silicon generation plant during the manufacture of silicon material. The term "silicon generation plant," as used in the present context, refers to a factory that produces silicon, which can be employed, for example, to a factory that produces solar cells, or that uses solar cells with solar panels of high-purity silicon as the cell elements capable of directly converting the solar energy into electric energy. Because equation (3) is an endothermic reaction, thermal energy is required to activate the reaction. The required thermal energy may be partially or substantially provided from the waste thermal energy of the furnace of the silicon generation plant. An additional purification process may be performed to the generated silicon carbide (SiC) for promoting its purity.

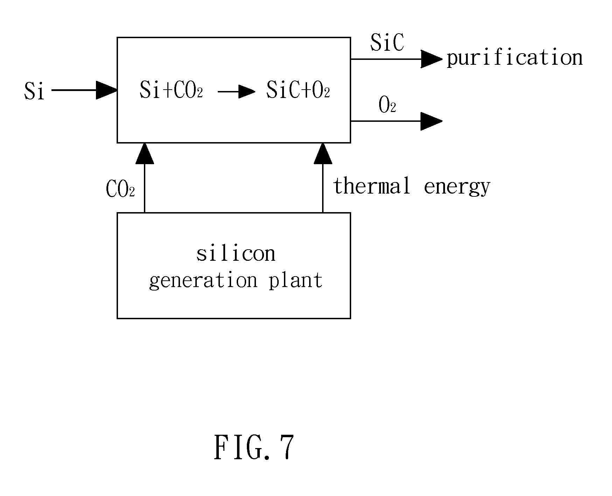

FIG. 7 shows a block diagram for producing silicon carbide (SiC) according to another embodiment of the present invention in which equation (4) is employed. In this example, required carbon dioxide is provided from the discharging gas of a furnace of a silicon generation plant during the manufacture of silicon material, and silicon (Si) needed for the reaction may be taken from the failed semiconductor silicon devices, such as intermediate products and scraps taken from single crystal rods of semiconductor silicon as grown, unacceptable crystals, broken silicon wafers, and so on, or, directly come from the product silicon stream of the furnace of the silicon generation plant. Because equation (4) is an endothermic reaction, thermal energy is required to activate the reaction. The required thermal energy may be partially or substantially provided from the waste thermal energy of the furnace of the silicon generation plant. Accordingly, silicon carbide (SiC) and oxygen gas are generated thereby. An additional purification process may be performed to the generated silicon carbide (SiC) for promoting its purity.

Note that the embodiments described above utilize carbon dioxide and waste thermal energy come from a thermal power plant or a silicon generation plant; however, one skilled in the art knows that the systems and methods of the present invent may also be applied to other kinds of plant with the problem of emission of carbon dioxide and waste thermal energy.

The above embodiments have further features and advantages as follows. Firstly, the reactions and processes employed by the present invention generate free of carbon dioxide. Secondly, the problem of carbon dioxide generated from the thermal power plant or silicon generation plant can be solved. Carbon dioxide discharged from the furnace of the thermal power plant or the silicon generation plant can be totally or substantially recycled as the reactant for producing silicon carbide raw material. This is quite an economic and safe way to treat carbon dioxide compared to bury it in the underground or ocean. Or, methods and systems of the present invention may also be treated as an alternative, effective carbon sequestration. It is appreciated that in equation (3) and (4) one silicon atom captures one carbon atom, so that no any by-products containing carbon will be generated.

Thirdly, utilizing the recycled carbon dioxide will significantly decrease the consumption of natural resources, such as carbon, charcoal, wood, oil, or natural gas; therefore the environment can be protected and the materials cost can be saved. Fourthly, the system for producing silicon carbide is linked to a plant, such as a thermal power plant or a silicon generation plant, which can effectively provide thermal energy and electricity needed for the system, reducing energy loss. Particularly, in the embodiment of FIG. 7, all required reactants, including carbon dioxide and silicon, may be completely come from the silicon generation plant.

Fifthly, the generated silicon carbide can be used in fabrication of various industrial devices, such as light emitting diodes. The generated oxygen may be recycled to an apparatus, such as the furnace of the thermal power plant, or the furnace of the silicon generation plant, as an oxidant and combustion-supporting gas for burning the fossil fuels, such as carbon. The generated oxygen may also be recycled to an air conditioning system of a building, such as a residential house, an office, or an industrial factory, for properly maintaining carbon dioxide/oxygen concentration in this building. Or, the generated oxygen may be combusted with hydrogen gas for producing steam and energy, which has various applications. Sixthly, because the product-carbon dioxide-of the reaction for silicon generation is removed and oxygen can be recycled to promote the efficiency of the furnace, the reaction will toward the direction of product so that the yield of silicon will be increased.

Accordingly, the embodiments of the present invention provides novel systems and methods for producing silicon carbide and increasing the yield of the production of silicon raw material in a manner that is cost effective, energy efficient, and friendly to the environment.

Notice that the use of the terms *a, an,* etc. do not denote a limitation of quantity, but rather denote the presence of at least one of the referenced item. Although specific embodiments have been illustrated and described, it will be appreciated by those skilled in the art that various modifications may be made without departing from the scope of the present invention, which is intended to be limited solely by the appended claims.

## Claims

1. A method for fabricating a silicon carbide material, comprising:
recycling a carbon dioxide (CO₂) emitted from a plant; and
employing the recycled carbon dioxide and a silicon dioxide (Si02) to produce the silicon carbide (SiC) material and an oxygen.

2. The method as recited in claim 1, wherein the plant comprises a thermal power plant having a furnace, and the waste thermal energy of the furnace provides at least partial thermal energy required for producing the silicon carbide (SiC) material.

3. The method as recited in claim 2, wherein the thermal power plant further provides electricity required for producing the silicon carbide (SiC) material.

4. The method as recited in claim 2, wherein the generated oxygen is recycled to the furnace of the thermal power plant, as an oxidant and combustion-supporting gas.

5. The method as recited in claim 1, wherein the plant comprises a silicon generation plant having a furnace, and the waste thermal energy of the furnace provides at least partial thermal energy required for producing the silicon carbide (SiC) material.

6. The method as recited in claim 5, wherein the generated oxygen is recycled to the furnace of the silicon generation plant, as an oxidant and combustion-supporting gas.

7. The method as recited in claim 1, wherein the required silicon dioxide is taken from wollastonite.

8. The method as recited in claim 1, wherein the generated oxygen is recycled to an air conditioning system of a building, for properly maintaining carbon dioxide/oxygen concentration in the building.

9. The method as recited in claim 1, wherein the generated oxygen is combusted with a hydrogen gas for producing steam and energy.

10. The method as recited in claim 1, wherein one silicon atom sequestrates one carbon atom, whereby no any by-products containing carbon is generated.

11. A method for fabricating a silicon carbide raw material, comprising:
recycling a carbon dioxide (CO₂) emitted from a plant; and
employing the recycled carbon dioxide and a silicon (Si) to produce silicon carbide (SiC) material and an oxygen.

12. The method as recited in claim 11, wherein the plant comprises a thermal power plant having a furnace, and the waste thermal energy of the furnace provides at least partial thermal energy required for producing the silicon carbide (SiC) material.

13. The method as recited in claim 12, wherein the thermal power plant further provides electricity required for producing the silicon carbide (SiC) material.

14. The method as recited in claim 12, wherein the generated oxygen is recycled to the furnace of the thermal power plant, as an oxidant and combustion-supporting gas.

15. The method as recited in claim 11, wherein the plant comprises a silicon generation plant having a furnace, and the waste thermal energy of the furnace provides at least partial thermal energy required for producing the silicon carbide (SiC) material.

16. The method as recited in claim 15, wherein the generated oxygen is recycled to the furnace of the silicon generation plant, as an oxidant and combustion-supporting gas.

17. The method as recited in claim 11, wherein the silicon required for producing the silicon carbide (SiC) material is provided from failed semiconductor devices.

18. The method as recited in claim 11, wherein the generated oxygen is recycled to an air conditioning system of a building, for properly maintaining carbon dioxide/oxygen concentration in the building.

19. The method as recited in claim 11, wherein the generated oxygen is combusted with a hydrogen gas for producing steam and energy.

20. The method as recited in claim 11, wherein one silicon atom sequestrates one carbon atom, whereby no any by-products containing carbon is generated.
